# EUROPÄISCHE PATENTSCHRIFT

(11) **EP 3 551 867 B1**
(45) Veröffentlichungstag und Bekanntmachung des Hinweises auf die Patenterteilung: **25.01.2023**
(21) Anmeldenummer: 17811264.5
(22) Anmeldetag: 01.12.2017
(51) Int. Cl.: F02D 9/10, F02M 26/70, F02M 26/71

(54) **KLAPPENVORRICHTUNG**
FLAP DEVICE
DISPOSITIF CLAPET

(30) Priorität: 08.12.2016 DE 102016123738
(43) Veröffentlichungstag der Anmeldung: 16.10.2019
(73) Patentinhaber: Pierburg GmbH, 41460 Neuss (DE)
(72) Erfinder: SCHNELLE, Sascha, 39104 Magdeburg (DE); WEISER, Michael, 41472 Neuss (DE); WEIDMANN, Bernd, 41542 Dormagen (DE)
(74) Vertreter: terpatent Patentanwälte ter Smitten Eberlein-Van Hoof Rütten Daubert
(86) Internationale Anmeldenummer: PCT/EP2017/081201
(87) Internationale Veröffentlichungsnummer: WO 2018/104173

(56) Entgegenhaltungen:
- DE-A1- 4 209 586
- DE-A1- 10 240 316
- DE-A1- 19 526 144
- DE-A1-102004 040 821
- DE-A1-102004 051 627
- DE-A1-102015 119 853
- DE-C1- 10 219 268
- DE-T2- 60 000 303
- US-A1- 2013 047 967
- US-A1- 2014 345 566

## Beschreibung

Die Erfindung betrifft eine Klappenvorrichtung für einen Verbrennungsmotor, mit einem Strömungskanalgehäuse, das einen Strömungskanal mit zumindest einer Einlassöffnung und einer ersten Auslassöffnung begrenzt, einem Klappenmodul, welches durch eine Öffnung in das Strömungskanalgehäuse einsteckbar ist und zumindest eine in dem Strömungskanalgehäuse drehbar gelagerte Klappenwelle, einen auf der Klappenwelle angeordneten Klappenkörper zur Regelung eines Durchströmungsquerschnitts des Strömungskanals, ein in der Öffnung angeordnetes Lagerelement, durch welches sich die Klappenwelle erstreckt, und einen Stellhebel, der mit der Klappenwelle an einem aus dem Strömungskanalgehäuse ragenden Ende der Klappenwelle drehfest verbunden ist und ein Kupplungsglied zur Kupplung mit einer Stellantriebseinrichtung und/oder einem Stellgetriebe aufweist.

Derartige Klappenvorrichtungen sind allgemein bekannt und dienen beispielsweise zur Regelung einer Abgasrückführung in einem Kraftfahrzeug-Verbrennungsmotor, um den Ausstoß von Schadstoffen zu reduzieren. Durch die stetig erhöhte Reduzierung der Schadstoffemissionen steigen auch die Anforderungen bezüglich der Funktionen, des Ansprechverhaltens und der Dichtheit dieser Klappen im geschlossenen Zustand. Es ist eine Vielzahl an Klappenvorrichtungen bekannt, bei denen eine Klappenstellung bzw. eine Dreh-Bewegungsfreiheit der Klappenwelle mittels einer außerhalb des Strömungskanals, an einer Stellantriebseinrichtung und/oder an einem Stellgetriebe angeordneten mechanischen Anschlageinrichtung erfolgt. Solche Anschlageinrichtungen sind jedoch - je nach Ausgestaltung - im Aufbau und Zusammenspiel der einzelnen Begrenzungskomponenten relativ aufwendig und komplex ausgestaltet, so dass zur Anordnung einer solchen Anschlageinrichtung ein relativ großer Montageraum außen an dem Strömungskanalgehäuse erforderlich ist. Ferner ist die Herstellung, Montage und Justierung einer solchen Klappenvorrichtung relativ kostenintensiv.

Aus der DE 102 40 316 A1 ist eine Klappenvorrichtung mit einem in ein Strömungskanalgehäuse einsteckbaren Klappenmodul bekannt. Ein Verstellen sowie ein Anfahren einer möglichen Endposition der Klappenwelle erfolgt über eine mit dem Klappenmodul gekoppelte Antriebseinheit bzw. ein Koppelgestänge, wobei eine Anschlageinrichtung nicht vorgesehen ist.

Aus der EP 1 167 724 A1 ist eine Klappenvorrichtung mit einem ein Klappenteil, eine Antriebseinrichtung und ein Übersetzungsgetriebe umfassenden Klappengehäuse bekannt. Eine den Kanal verschließende Stellung eines Klappenkörpers ist über einen an dem Klappengehäuse angeordneten Endanschlag eines der Getrieberäder definiert. Wie bereits oben erwähnt, führt eine solche Anordnung jedoch zu einem erhöhten Platzbedarf.

Des Weiteren ist aus der DE 600 00 303 T2 eine Klappenvorrichtung bekannt, bei der mehrere Klappenmodule in Einstecköffnungen des Saugrohres eingesteckt sind. Die die Öffnungen verschließenden Stopfen, werden am Saugrohr befestigt. An den Wellenenden der Klappen sind Hebel befestigt, die mit ihren Außenkanten gegen Anschläge des Stopfens drehbar sind, um die Bewegung zu begrenzen.

Der Erfindung liegt daher die Aufgabe zugrunde, eine Klappenvorrichtung bereitzustellen, die eine besonders exakte Regelung eines Abgasmassenstroms in allen Betriebszuständen, insbesondere auch bei kleinen Abgasströmen ermöglicht, wobei insbesondere eine hohe Dichtigkeit der Klappe, eine möglichst kompakte Bauform sowie eine möglichst kostengünstige Herstellung und Montage erzielt werden soll.

Die Lösung der Aufgabe erfolgt erfindungsgemäß durch eine Klappenvorrichtung mit den Merkmalen des Anspruchs 1. Vorteilhafte Ausgestaltungen und Weiterbildungen der Erfindung sind in den Unteransprüchen, der Beschreibung sowie den Figuren aufgeführt.

Erfindungsgemäß ist an dem Stellhebel zumindest ein Begrenzer zur Begrenzung einer Drehbewegung des Stellhebels und an dem Strömungskanalgehäuse ein die Öffnung verschließender separater Deckel angeordnet, an dem zumindest ein mit dem Begrenzer funktional zusammenwirkendes Anschlagelement angeordnet ist, wobei der Begrenzer als ein in axialer Richtung der Klappenwelle angeordneter Vorsprung ausgebildet ist und an dem Deckel eine Ausnehmung ausgebildet ist, die durch eine Umfangswand begrenzt ist, welche als Anschlagelement für einen in die Ausnehmung ragenden Begrenzer dient. Durch diese Anordnung kann der Stellhebel mit dem Begrenzer in zumindest einer Stellposition an dem Gegenbegrenzer des Deckels anliegen, beispielsweise in einer den Strömungskanal vollständig verschließenden Stellposition. Die Stellposition kann dadurch von außen in besonders einfacher Weise eingestellt bzw. justiert werden, so dass eine besonders hohe Dichtigkeit der Klappe ermöglicht ist. Durch den relativ flachen Aufbau des Deckels, der beispielsweise über eine Clip-, eine Schraubverbindung oder eine andere Befestigungsart an dem Strömungskanalgehäuse befestigt sein kann, ist an der Außenseite des Strömungskanalgehäuses eine besonders platzsparende Bauform eines Anschlagelements ermöglicht. Ferner ermöglicht eine solche Anordnung aufgrund der relativ geringen Anzahl der Bauteile sowie deren Anordnung außerhalb des Strömungskanalgehäuses eine besonders kostengünstige Herstellung und Montage. Der Vorsprung oder die Vorsprünge können derart angeordnet sein, dass bei einer Drehung des Stellhebels in zumindest einer Stellposition die Vorsprünge zur Begrenzung der Drehbewegung des Stellhebels aneinander stoßen und eine weitere Drehung blockiert ist. Die Vorsprünge weisen dazu vorteilhafterweise jeweils eine zum anderen ausgerichtete Fläche auf, mit denen die Vorsprünge aneinander liegen können. Beispielsweise kann ein solcher Vorsprung als eine Lasche, ein Stift oder ein gebogener Abschnitt des Stellhebels bzw. des Deckels ausgebildet sein. Dadurch ist eine besonders kompakte Bauform sowie eine besonders sichere und dauerhafte Begrenzung des Stellhebels an einer Drehposition ermöglicht. Die Ausnehmung kann beispielsweise eine an dem Deckel ausgebildete Öffnung, Bohrung oder Nut sein, in deren Erstreckungsebene der Stellhebel mit dem - beispielsweise als Vorsprung ausgebildeten - Begrenzer hineinragt. Die der Ausnehmung zugewandte Umfangswand des Deckels kann dadurch als seitliche Begrenzung bzw. Anschlagelement für den in der Ebene der Ausnehmung bewegbaren Begrenzer dienen. Dadurch ist eine besonders flache, platzsparende und kostengünstige Bauform ermöglicht. Das Lagerelement ist in der Öffnung des Strömungskanalgehäuses angeordnet und bildet einen Verschluss des Strömungskanals gegenüber der Umgebung.

Vorzugsweise ist ein erstes Anschlagelement an einem ersten Umfangswandabschnitt und ein zweites Anschlagelement an einem zweiten Umfangswandabschnitt angeordnet, wobei bei Anliegen des Begrenzers an dem ersten Umfangswandabschnitt, insbesondere in einer ersten End-Stellposition des Stellhebels, der Klappenkörper die erste Auslassöffnung gegenüber der Einlassöffnung vollständig freigibt und bei Anliegen des Begrenzers an dem zweiten Umfangswandabschnitt, insbesondere in einer zweiten End-Stellposition des Stellhebels, der Klappenkörper die erste Auslassöffnung gegenüber der Einlassöffnung vollständig verschließt. Der Stellhebel kann dadurch in einem Bereich zwischen den beiden Umfangswandabschnitten, insbesondere im Bereich der Ausnehmung, frei bewegbar sein und durch die Umfangswandabschnitte in der Bewegungsfreiheit begrenzt sein. Dadurch ist eine besonders flache und platzsparende Bauform einer Begrenzungseinrichtung ermöglicht.

Die Anschlagelemente können bezüglich einer Längsachse der Klappenwelle, insbesondere einer Drehachse der Klappenwelle, in einem Winkel zueinander von etwa 90° angeordnet sein, so dass der Stellhebel in einem Drehwinkel von etwa 90° drehbar ist. Dadurch ist eine optimale Bewegungsfreiheit des Stellhebels zum vollständigen Öffnen und Schließen des Strömungskanals mittels des Klappenkörpers ermöglicht. Insbesondere kann in einer ersten End-Stellposition des Stellhebels der Strömungskanals vollständig freigegeben und in einer zweiten End-Stellposition, in der der Stellhebel zu ersten End-Stellposition um 90° gedreht angeordnet ist, vollständig verschlossen sein.

Vorzugsweise ist die Projektionsfläche des Stellhebels und der Klappenwelle auf den Deckel kleiner als die Ausnehmung in dem Deckel. Folglich kann die Ausnehmung flächenmäßig derart groß ausgebildet sein, dass der Stellhebel die Ausnehmung zumindest in einer Stellposition des Stellhebels in axialer Richtung der Klappenwelle berührungsfrei durchstoßen kann. Dadurch kann bei einer Montage der Klappenvorrichtung zunächst das Klappenmodul, inklusive Stellhebel, in das Strömungskanalgehäuse eingesetzt werden und sodann - bei Aufsetzen des Deckels - der Stellhebel durch den Deckelausschnitt geführt und der Deckel auf das Strömungsgehäuse aufgesetzt und hieran befestigt werden, so dass der Deckel zwischen Stellhebel und Strömungskanalgehäuse angeordnet ist. Dadurch ist eine besonders flache, platzsparende und in Herstellung und Montage kostengünstige Bauform ermöglicht.

In einer vorteilhaften Ausgestaltung der Erfindung weist der Deckel eine Fixiereinrichtung zur Fixierung der Stellantriebseinrichtung und/oder des Stellgetriebes auf. Die Fixiereinrichtung kann beispielsweise als ein hervorstehender Aufnahmeabschnitt ausgebildet sein, in den ein korrespondierender Gegenabschnitt einer Stellantriebseinrichtung und/oder eines Stellgetriebes eingreifen kann und somit an dem Deckel gehalten werden kann. Die Anordnung eines beispielsweise am Strömungskanalgehäuse separat angeordneten Halters kann dadurch vermieden werden. Folglich ist eine besonders platzsparende und kostengünstige Bauform einer Begrenzungseinrichtung ermöglicht.

Vorzugsweise ist zwischen dem Deckel und dem Strömungskanalgehäuse eine Dichtung angeordnet. Dadurch kann das Strömungskanalgehäuse gegenüber der Umgebung primär oder zusätzlich über eine an dem Deckel angeordnete Dichtung abgedichtet sein. Die Dichtung kann bereits vor einer Endmontage an dem Deckel befestigt oder angebracht sein, so dass die Montage in relativ einfacher Weise erfolgen kann.

Vorzugsweise ist das Kupplungsglied als eine, bevorzugt von dem Stellhebel in Richtung weg von dem Strömungskanalgehäuse hervorstehende Kugelkupplung ausgebildet ist. Dadurch kann eine Stellantriebseinrichtung und/oder ein Stellgetriebe in einem relativ großen Winkelbereich an den Stellhebel gekoppelt werden, so dass die Klappenvorrichtung bei unterschiedlich angeordneten Stellantriebseinrichtungen und/oder Stellgetriebe - beispielsweise bei verschiedenen Fahrzeugtypen - angewendet werden kann.

Vorzugsweise sind das Kupplungsglied und der Begrenzer, insbesondere bezüglich der Längserstreckung des Stellhebels, an dem Stellhebel gegenüberliegend angeordnet sind. Dadurch kann eine besonders feine Justierung der Begrenzung und somit eine besonders hohe Dichtigkeit der Klappe erreicht werden.

Vorzugsweise ist die Klappenwelle an einem zweiten freien Ende, beispielsweise über eine Buchse, in einer Wand des Strömungskanalgehäuses gelagert. Dadurch kann die Klappenwelle in dem Strömungskanalgehäuse besonders exakt gelagert sein und eine besonders hohe Dichtigkeit der Klappe erreicht werden.

In einer vorteilhaften Ausgestaltung der Erfindung weist der Strömungskanal zusätzlich eine zweite Auslassöffnung auf, wobei der Klappenkörper in einer ersten Stellung eine Fluidströmung zwischen der Einlassöffnung und der ersten Auslassöffnung freigibt und zwischen der Einlassöffnung und der zweiten Auslassöffnung sperrt, und der Klappenkörper in einer zweiten Stellung eine Fluidströmung zwischen der Einlassöffnung und der zweiten Auslassöffnung freigibt und zwischen der Einlassöffnung und der ersten Auslassöffnung sperrt. In einer Zwischenstellung des Klappenkörpers können beide Auslassöffnungen gegenüber der Einlassöffnung fluidisch freigegeben sein. Dadurch kann die Klappenvorrichtung nicht nur zur Regelung einer Durchströmung sondern auch zur Regelung mehrerer Auslassöffnungen, insbesondere als ein Ventil, dienen. Dadurch eignet sich die Klappenvorrichtung insbesondere für Abgasklappenventile mit einem Umgehungskanal.

Vorzugsweise ist der Klappenkörper als ein gebogenes Blech ausgebildet und radial auf die Klappenwelle aufgesetzt und daran befestigt. Insbesondere kann der Klappenkörper seitlich auf die Welle aufgesetzt sei. Dadurch ist es nicht erforderlich, dass der Klappenköper eine Durchführung für die Klappenwelle aufweist, so dass der der Klappenköper relativ einfach und kostengünstig aufgebaut sein kann.

Nachfolgend wird die Erfindung anhand zwei bevorzugter Ausführungsformen unter Bezugnahme auf die anliegenden Zeichnungen näher erläutert. Es zeigen schematisch
- Figur 1:: eine Schnittansicht einer erfindungsgemäßen Klappenvorrichtung,
- Figur 2:: eine perspektivische Ansicht der Klappenvorrichtung,
- Figuren 3a, 3b, 3c:: jeweils eine Draufsicht der Klappenvorrichtung, und
- Figuren 4a und 4b:: jeweils eine Schnittansicht einer weiteren Klappenvorrichtung.

Die in den Figuren gezeigte erfindungsgemäße Klappenvorrichtung 1 ist als ein Abgasrückführventil ausgebildet und dient zur Regelung eines Abgasstroms in einem Strömungskanal 20, insbesondere einem Ansaugtrakt eines nicht dargestellten Kraftfahrzeug-Verbrennungsmotors. Die Klappenvorrichtung 1 weist ein Klappenmodul 3 auf, welches in ein den Strömungskanal 20 begrenzendes Strömungskanalgehäuse 2 eingesetzt ist. Das Klappenmodul 3 umfasst eine Klappenwelle 30, einen mit der Klappenwelle 30 drehfest verbundenen Klappenkörper 31, ein die Klappenwelle 30 führendes Lagerelement 36 und einen Stellhebel 33 zum rotatorischen Verstellen der Klappenwelle 30 bzw. des Klappenkörpers 31. Das Klappenmodul 3 bildet eine Einheit und kann somit vollständig vormontiert in eine im Strömungskanalgehäuse 2 ausgebildete Öffnung 24 zur Aufnahme des Klappenmoduls 3 eingesetzt werden. Die Öffnung 24 des Strömungskanalgehäuses 2 ist vorteilhafterweise korrespondierend zu dem Klappenmodul 3 ausgebildet, vorliegend als eine runde, radial zum Strömungskanal 20 angeordnete Ausnehmung.

Die Klappenwelle 30 weist ein erstes freies Ende 37a auf, welches außerhalb des Strömungskanalgehäuses 2 angeordnet ist, und an welchem der Stellhebel 33 befestigt ist. Die Klappenwelle 30 erstreckt sich durch das Lagerelement 36 und quer durch den Strömungskanal 20. An einem weiten freien Ende 37b greift die Klappenwelle 30 in eine an dem Strömungskanalgehäuse 2 angeordnete Buchse 38 ein und ist hier ebenfalls gelagert.

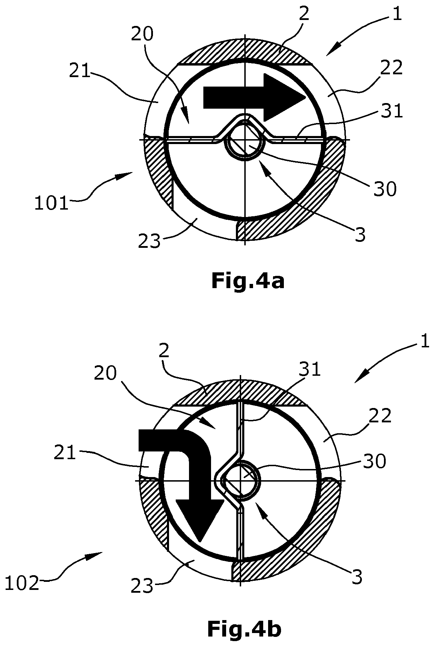

Der Klappenkörper 31 ist vorliegend - wie insbesondere in den Figuren 4a und 4b erkennbar ist - als ein gebogenes rechteckiges Blech radial auf die Klappenwelle 30 aufgesetzt und hieran, insbesondere symmetrisch zur Klappenwelle 30, befestigt. Dadurch liegt an der Klappenwelle 30 ein auf beide Seiten der Klappenwelle 30 gleichmäßig verteilter Gasdruck an dem Klappenkörper 31 an, so dass zum Drehen des Klappenkörpers 31 eine relativ geringe Stellkraft ausreichend ist.

Das Lagerelement 36 ist im Bereich der Öffnung 24 des Strömungskanalgehäuses 2 angeordnet und bildet einen Verschluss des Strömungskanals 20 gegenüber der Umgebung. Zur Vermeidung einer Leckageströmung weist das Lagerelement 36 an einer zu der Klappenwelle 30 zugewandten radialen Innenseite einen Dichtring 36b auf. Optional ist an einer dem Strömungskanalgehäuse 2 zugewandten Außenseite ein umlaufendes Dichtelement 36a angeordnet. Die Dichtelemente 36a, 36b können hierbei jeweils als ein Lippendichtring ausgebildet sein.

Der Stellhebel 33 zur Betätigung des Klappenkörpers 31 ist an dem aus dem Strömungskanalgehäuse 2 ragenden freien Ende 37a der Klappenwelle 30 angeordnet und mit der Klappenwelle 30 drehfest verbunden. Der Stellhebel 33 weist an einem ersten Ende ein Kupplungsglied 34 zur Kupplung mit einer Stellantriebseinrichtung 5 und/oder einem Stellgetriebe 51 auf. An einem hierzu gegenüberliegenden Ende weist der Stellhebel 33 einen Begrenzer 35 zur Begrenzung einer Drehbewegung des Stellhebels 33 auf. Der Begrenzer 35 ist vorliegend als ein in axialer Richtung der Klappenwelle 30 angeordneter Vorsprung ausgebildet, der dem Stellhebel 33 in Richtung des Strömungskanalgehäuses 2 hervorsteht. Insbesondere ist der Begrenzer 35 als ein gebogener Abschnitt des Stellhebels 33 ausgebildet.

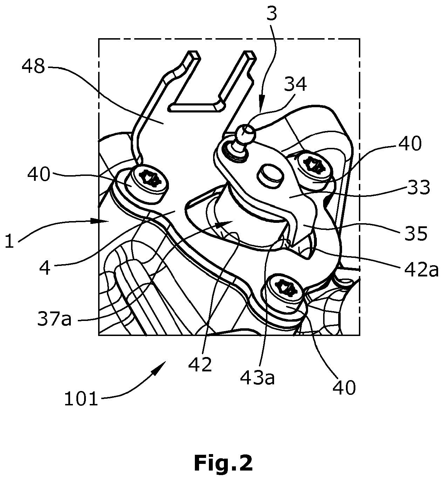

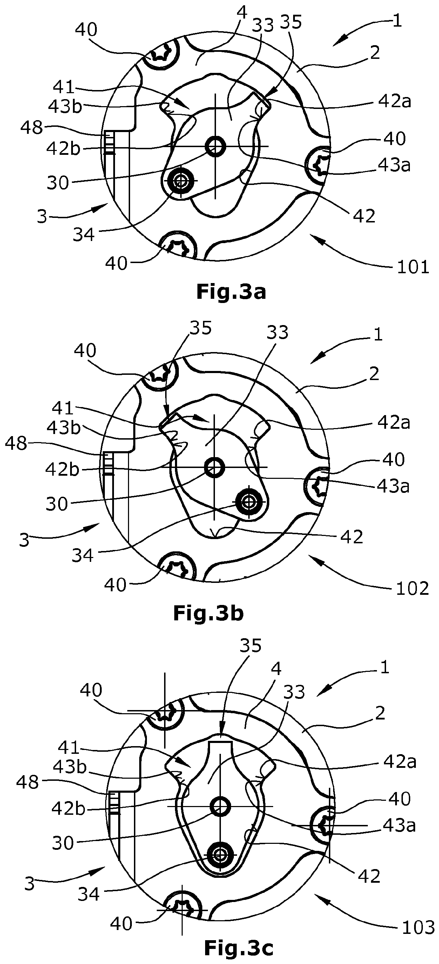

Um nach einem Einsetzen des Klappenmoduls 3 in die Öffnung 24 des Strömungskanalgehäuses 2 das Klappenmodul 3 gegen ein Herausfallen zu sichern, ist ein Deckel 4 vorgesehen. Der Deckel 4 kann als ein Stanzbiegeteil ausgebildet sein und wird außen an dem Strömungskanalgehäuse 2 befestigt. Vorliegend ist der Deckel 4 über drei Schrauben 40 an dem Strömungskanalgehäuses 2 befestigt. Zwischen dem Deckel 4 und dem Strömungskanalgehäuse 2 ist optional ein Dichtelement 44 vorgesehen. Zur Fixierung der Stellantriebseinrichtung 5 und/oder des Stellgetriebe 51 im Bereich des Strömungskanalgehäuses 2 weist der Deckel 4 eine Fixiereinrichtung 48 auf, wie insbesondere in der Figur 2 erkennbar ist. Um den Deckel 4 auf das Strömungskanalgehäuse 2 aufsetzen zu können, weist der Deckel 4 eine zentrische Ausnehmung 41 auf, durch die sich der Stellhebel 33 erstrecken kann. Dazu ist die Projektionsfläche des Stellhebels 33 und der Klappenwelle 30 kleiner ausgebildet als die Ausnehmung 41. Insbesondere kann bei einer Montage der Stellhebel 33 berührungsfrei durch die Ausnehmung 41 des Deckels 4 geführt werden. Dies erfolgt vorteilhafterweise In der in Figur 3c gezeigten dritten Stellung 103 der Klappenwelle 31.

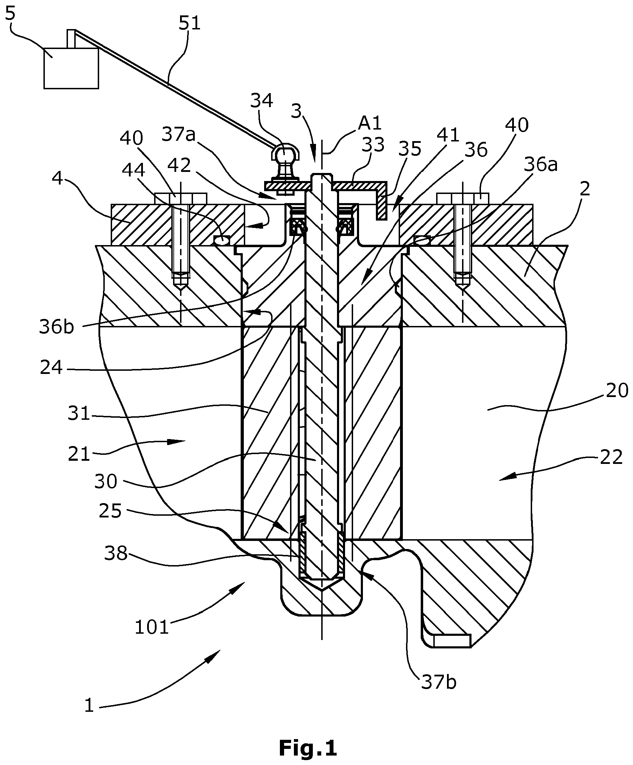

Nach der Montage des Deckels 4 an dem Strömungskanalgehäuse 2 befindet sich der am Stellhebel 33 angeordnete Begrenzer 35 in der Ebene der Ausnehmung 41 des Deckels 4, wie insbesondere in Figur 1 erkennbar ist. Die Bewegungsfreiheit des Begrenzers 35 kann folglich durch eine die Ausnehmung 41 umgebende Umfangswand 42 begrenzt werden. Dazu sind an der Umfangswand 42 zumindest zwei Umfangswandabschnitte 42a, 42b als Anschlagelemente 43a, 43b ausgebildet. Insbesondere ist an einem ersten Umfangswandabschnitt 42a ein erstes Anschlagelement 43, und an einem zweiten Umfangswandabschnitt 42b ein zweites Anschlagelement 43b vorgesehen, wobei der Begrenzer 35 bei Drehen des Stellhebels 33 in eine Richtung mit dem ersten Anschlagelement 43a und bei Drehen des Stellhebels 33 in die andere Richtung mit dem zweiten Anschlagelement 43b in Berührung gelangen kann. Dadurch kann der Begrenzer 35 in einer ersten End-Stellposition 101 an dem ersten Anschlagelement 43 und in einer zweiten End-Stellposition 102 an dem zweiten Anschlagelement 43b anliegen, wie insbesondere in Figuren 3a und 3b dargestellt.

In der in Figur 3a gezeigten ersten Stellposition 101 kann der im Strömungskanal 20 angeordnete Klappenkörper 31 eine erste Auslassöffnung 22 gegenüber einer Einlassöffnung 21 vollständig freigeben, in der in Figur 3b gezeigten zweiten Stellposition 102 kann der Klappenkörper 31 die erste Auslassöffnung 22 gegenüber der Einlassöffnung 21 vollständig verschließen. In einer besonderen Ausgestaltung des Strömungskanalgehäuses 2, wie es insbesondere in den Figuren 4a und 4b gezeigt ist, weist das Strömungskanalgehäuse 2 neben der Einlassöffnung 21 und der ersten Auslassöffnung 22 eine zusätzliche zweite Auslassöffnung 23 auf. Die erste Auslassöffnung 22 kann hierbei mit einem nicht dargestellten Wärmetauscher, die zweite Auslassöffnung 23 mit einer nicht dargestellten Umgehungsleitung verbunden sein. Zur Lenkung eines Abgasstroms von der Einlassöffnung 21 zu der ersten Auslassöffnung 22 oder zu der zweiten Auslassöffnung 23, ist die Klappenvorrichtung 1 vorgesehen, wobei eine konstruktive Änderung des in den vorangegangenen Figuren gezeigten Klappenmoduls 3 nicht erforderlich ist. Im Betrieb gibt der Klappenkörper 31 in der ersten Stellposition 101 die erste Auslassöffnung 22 gegenüber der Einlassöffnung 21 vollständig frei und verschließt die zweite Auslassöffnung 23 gegenüber der Einlassöffnung 21. In der zweiten Stellposition 102 gibt der Klappenkörper die zweite Auslassöffnung 23 gegenüber der Einlassöffnung 21 frei und verschließt die erste Auslassöffnung 22 gegenüber der Einlassöffnung 21. Dadurch kann die Klappenvorrichtung 1 insbesondere auch als ein 3/2-Wege-Ventil dienen.

Es sollte deutlich sein, dass der Hauptanspruch nicht auf das beschriebene Ausführungsbeispiel begrenzt ist. Wie bereits erwähnt ist eine Anpassung des Strömungskanalgehäuses, der Klappenwelle mit Klappenkörper oder des Kupplungsglieds an die Lage und Ausführung des Strömungskanals oder der jeweils anzuschließenden Komponenten für den Fachmann selbstverständlich. Entsprechend können auch mehrere an einer Klappenwelle angeordnete Klappenkörper vorgesehen sein.

### Bezugszeichenliste

- 1: Klappenvorrichtung

- 2: Strömungskanalgehäuse
- 20: Strömungskanal
- 21: Einlassöffnung
- 22: erste Auslassöffnung
- 23: zweite Auslassöffnung
- 24: Öffnung
- 25: Wand

- 3: Klappenmodul
- 30: Klappenwelle
- 31: Klappenkörper
- 33: Stellhebel
- 34: Kupplungsglied
- 35: Begrenzer
- 36: Lagerelement
- 36a: Dichtelement
- 36b: Dichtelement
- 37a: freies Ende
- 37b: freies Ende
- 38: Buchse

- 4: Deckel
- 40: Schraube
- 41: Ausnehmung
- 42: Umfangswand
- 42a: Umfangswandabschnitt
- 42b: Umfangswandabschnitt
- 43a: Anschlagelement, erster Anschlagbereich
- 43b: Anschlagelement, zweiter Anschlagbereich
- 44: Dichtelement
- 48: Fixiereinrichtung

- 5: Stellantriebseinrichtung
- 51: Stellgetriebe

- 101: erste Stellposition
- 102: zweite Stellposition
- 103: dritte Stellposition

- A1: Drehachse Klappenwelle

## Patentansprüche

1. Klappenvorrichtung (1) für einen Verbrennungsmotor, mit
- einem Strömungskanalgehäuse (2), das einen Strömungskanal (20) mit zumindest einer Einlassöffnung (21) und einer ersten Auslassöffnung (22) begrenzt,
- einem Klappenmodul (3), welches durch eine Öffnung (24) in das Strömungskanalgehäuse (2) einsteckbar ist und zumindest
o eine in dem Strömungskanalgehäuse (2) drehbar gelagerte Klappenwelle (30),
o einen auf der Klappenwelle (30) angeordneten Klappenkörper (31) zur Regelung eines Durchströmungsquerschnitts des Strömungskanals (20),
o ein in der Öffnung (24) angeordnetes Lagerelement (36), durch welches sich die Klappenwelle (30) erstreckt, und
o einen Stellhebel (33), der mit der Klappenwelle (30) an einem aus dem Strömungskanalgehäuse (2) ragenden Ende (37a) der Klappenwelle (30) drehfest verbunden ist und ein Kupplungsglied (34) zur Kupplung mit einer Stellantriebseinrichtung (5) und/oder einem Stellgetriebe (51) aufweist,
**dadurch gekennzeichnet, dass**
an dem Stellhebel (33) zumindest ein Begrenzer (35) zur Begrenzung einer Drehbewegung des Stellhebels (33) angeordnet ist, und an dem Strömungskanalgehäuse (2) ein die Öffnung (24) verschließender separater Deckel (4) angeordnet ist, an dem zumindest ein mit dem Begrenzer (35) funktional zusammenwirkendes Anschlagelement (43a, 43b) angeordnet ist, wobei der Begrenzer (35) als ein in axialer Richtung der Klappenwelle (30) angeordneter Vorsprung ausgebildet ist und an dem Deckel (4) eine Ausnehmung (41) ausgebildet ist, die durch eine Umfangswand (42, 42a, 42b) begrenzt ist, welche als Anschlagelement (43a, 43b) für einen in die Ausnehmung (41) ragenden Begrenzer (35) dient,
wobei das Lagerelement (36) in der Öffnung (24) des Strömungskanalgehäuses (2) angeordnet ist und einen Verschluss des Strömungskanals (20) gegenüber der Umgebung bildet.

2. Klappenvorrichtung (1) nach Anspruch 1, **dadurch gekennzeichnet, dass**
ein erstes Anschlagelement (43a) durch einen ersten Umfangswandabschnitt (42a) und ein zweites Anschlagelement (43b) durch einen zweiten Umfangswandabschnitt (42b) gebildet ist, wobei bei Anliegen des Begrenzers (35) an dem ersten Umfangswandabschnitt (42a) der Klappenkörper (31) die erste Auslassöffnung (22) gegenüber der Einlassöffnung (21) vollständig freigibt und bei Anliegen des Begrenzers (35) an dem zweiten Umfangswandabschnitt (42b) der Klappenkörper (31) die erste Auslassöffnung (22) gegenüber der Einlassöffnung (21) vollständig verschließt.

3. Klappenvorrichtung (1) nach Anspruch 2, **dadurch gekennzeichnet, dass**
die Anschlagelemente (43a, 43b) zur Drehachse (A1) der Klappenwelle (30) in einem Winkel von etwa 90° zueinander angeordnet sind.

4. Klappenvorrichtung (1) nach einem der vorhergehenden Ansprüche,
**dadurch gekennzeichnet, dass**
in zumindest einer Stellposition (100) des Stellhebels (33) die Projektionsfläche des Stellhebels (33) und der Klappenwelle (30) auf den Deckel (4) kleiner ist als die Ausnehmung (41) in dem Deckel (4).

5. Klappenvorrichtung (1) nach einem der voranstehenden Ansprüche,
**dadurch gekennzeichnet, dass**
der Deckel (4) eine Fixiereinrichtung (48) zur Fixierung der Stellantriebseinrichtung (5) und/oder des Stellgetriebes (51) aufweist.

6. Klappenvorrichtung (1) nach einem der voranstehenden Ansprüche,
**dadurch gekennzeichnet, dass**
zwischen dem Deckel (4) und dem Strömungskanalgehäuse (2) eine Dichtung (44) angeordnet ist.

7. Klappenvorrichtung (1) nach einem der voranstehenden Ansprüche,
**dadurch gekennzeichnet, dass**
das Kupplungsglied (34) als eine Kugelkupplung ausgebildet ist.

8. Klappenvorrichtung (1) nach einem der voranstehenden Ansprüche,
**dadurch gekennzeichnet, dass**
das Kupplungsglied (34) und der Begrenzer (35) an dem Stellhebel (33) gegenüberliegend angeordnet sind.

9. Klappenvorrichtung (1) nach einem der voranstehenden Ansprüche,
**dadurch gekennzeichnet, dass**
die Klappenwelle (30) an einem zweiten freien Ende (37b) in einer Wand (25) des Strömungskanalgehäuses (2) gelagert ist.

10. Klappenvorrichtung (1) nach einem der voranstehenden Ansprüche,
**dadurch gekennzeichnet, dass**
der Strömungskanal (20) zusätzlich eine zweite Auslassöffnung (23) aufweist, und der Klappenkörper (31) in einer ersten Stellung (101) eine Fluidströmung zwischen der Einlassöffnung (21) und der ersten Auslassöffnung (22) freigibt und zwischen der Einlassöffnung (21) und der zweiten Auslassöffnung (23) sperrt, und in einer zweiten Stellung (102) eine Fluidströmung zwischen der Einlassöffnung (21) und der zweiten Auslassöffnung (23) freigibt und zwischen der Einlassöffnung (21) und der ersten Auslassöffnung (22) sperrt.

11. Klappenvorrichtung (1) nach einem der voranstehenden Ansprüche,
**dadurch gekennzeichnet, dass**
der Klappenkörper (31) als ein gebogenes Blech ausgebildet ist und radial auf die Klappenwelle (30) aufgesetzt und befestigt ist.

## Claims

1. Flap device (1) for an internal combustion engine, comprising
- a flow channel housing (2) which delimits a flow channel (20) with at least one inlet opening (21) and one first outlet opening (22)
- a flap module (3) which can be inserted into the flow duct housing (2) through an opening (24) and at least
• a flap shaft (30) rotatably beared in the flow channel housing (2),
• a flap body (31) arranged on the flap shaft (30) for regulating a throughflow cross section of the flow channel (20)
• a bearing element (36) arranged in the opening (24), through which the flap shaft (30) extends, and
• an actuating lever (33) which is connected in a rotationally fixed manner to the flap shaft (30) at an end (37a) of the flap shaft (30) projecting out of the flow channel housing (2) and which has a coupling member (34) for coupling to an actuating drive device (5) and/or an actuating transmission (51),
**characterized in that**
at least one limiter (35) for limiting a rotary movement of the actuating lever (33) is arranged on the adjusting lever (33), and a separate cover (4) closing the opening (24) is arranged on the flow channel housing (2), on which cover (4) at least one stop element (43a, 43b) cooperating functionally with the limiter (35) is arranged, wherein the limiter (35) is configured as a projection oriented in the axial direction of the flap shaft (30) and a recess (41) is configured on the cover (4), which recess is delimited by a circumferential wall (42, 42a, 42b), which is configured as the stop element (43a, 43b) for the limiter (35) projecting into the recess (41), the bearing element (36) being arranged in the opening (24) of the flow channel housing (2) and forming a closure of the flow channel (20) with respect to the surroundings.

2. Flap device (1) according to claim 1,
**characterized in that**
a first stop element (43a) is defined by a first peripheral wall portion (42a) and a second stop element (43b) is defined by a second circumferential wall portion (42b), wherein, when the limiter (35) abuts the first circumferential wall portion (42a), the flap body (31) completely opens the first outlet opening (22) with respect to the inlet opening (21), and when the limiter (35) abuts the second circumferential wall portion (42b), the flap body (31) completely closes the first outlet opening (22) with respect to the inlet opening (21).

3. Flap device (1) according to claim 2,
**characterized in that**
the stop elements (43a, 43b) are arranged at an angle of approximately 90° to one another with respect to the axis of rotation (A1) of the flap shaft (30).

4. Flap device (1) according to one of the preceding claims,
**characterized in that**
in at least one adjusting position (100) of the adjusting lever (33), the projection surface of the adjusting lever (33) and of the flap shaft (30) onto the cover (4) is smaller than the recess (41) in the cover (4).

5. Flap device (1) according to one of the preceding claims,
**characterized in that**
the cover (4) comprises a fixing device (48) for fixing the actuating device (5) and/or the actuating transmission (51).

6. Flap device (1) according to one of the preceding claims,
**characterised in that**
a seal (44) is arranged between the cover (4) and the flow channel housing (2).

7. Flap device (1) according to one of the preceding claims,
**characterized in that**
the coupling member (34) is configured as a ball coupling.

8. Flap device (1) according to one of the preceding claims,
**characterized in that**
the coupling member (34) and the limiter (35) are arranged opposite one another on the adjusting lever (33).

9. Flap device (1) according to one of the preceding claims,
**characterized in that**
the flap shaft (30) is beared at a second free end (37b) in a wall (25) of the flow channel housing (2).

10. Flap device (1) according to one of the preceding claims,
**characterized in that**
the flow channel (20) additionally comprises a second outlet opening (23), and the flap body (31) in a first position (101) opens a fluid flow between the inlet opening (21) and the first outlet opening (22) and closes between the inlet opening (21) and the second outlet opening (23) and in a second position (102) opens a fluid flow between the inlet opening (21) and the second outlet opening (23) and closes between the inlet opening (21) and the first outlet opening (22).

11. Flap device (1) according to one of the preceding claims,
**characterized in that**
the flap body (31) is configured as a bent sheet and is radially placed and attached to the flap shaft (30).

## Revendications

1. Dispositif de clapet (1) pour un moteur à combustion interne, avec
- un boîtier de canal d'écoulement (2) qui délimite un canal d'écoulement (20) avec au moins une ouverture d'entrée (21) et une première ouverture de sortie (22),
- un module de clapet (3) qui peut être inséré dans le boîtier de canal d'écoulement (2) à travers une ouverture (24) et au moins
- un arbre de clapet (30) supporté de manière rotative dans le boîtier de canal d'écoulement (2),
- un corps de clapet (31) disposé sur l'arbre de clapet (30) pour réguler une section transversale d'écoulement du canal d'écoulement (20),
- un élément de palier (36) disposé dans l'ouverture (24), à travers lequel s'étend l'arbre de clapet (30), et
- un levier de réglage (33) qui est relié de manière solidaire en rotation à l'arbre de clapet (30) à une extrémité (37a) de l'arbre de clapet (30) dépassant du boîtier de canal d'écoulement (2) et qui comprend un élément d'accouplement (34) pour l'accouplement avec un dispositif d'entraînement de réglage (5) et/ou un engrenage de réglage (51),
**caractérisé en ce que**
au moins un limiteur (35) est disposé sur le levier de réglage (33) pour limiter un mouvement de rotation du levier de réglage (33), et un couvercle séparé (4) qui ferme l'ouverture (24) est disposé sur le boîtier de canal d'écoulement (2), sur lequel est disposé au moins un élément de butée (43a, 43b) qui coopère de manière fonctionnelle avec le limiteur (35), le limiteur (35) est réalisé sous la forme d'une saillie disposée dans la direction axiale de l'arbre de clapet (30) et un évidement (41) est réalisé sur le couvercle (4), lequel est délimité par une paroi périphérique (42, 42a, 42b) qui sert d'élément de butée (43a, 43b) pour un limiteur (35) qui fait saillie dans l'évidement (41), l'élément de palier (36) est disposé dans l'ouverture (24) du boîtier du canal d'écoulement (2) et constitue une fermeture du canal d'écoulement (20) par rapport à l'environnement.

2. Dispositif de clapet (1) selon la revendication 1, **caractérisé en ce que**
un premier élément de butée (43a) est formé par une première portion de paroi périphérique (42a) et un deuxième élément de butée (43b) est formé par une deuxième portion de paroi périphérique (42b), dans lequel, lorsque le limiteur (35) est en contact avec la première section de paroi périphérique (42a), le corps de clapet (31) libère complètement la première ouverture de sortie (22) par rapport à l'ouverture d'entrée (21) et, lorsque le limiteur (35) est en contact avec la deuxième section de paroi périphérique (42b), le corps de clapet (31) ferme complètement la première ouverture de sortie (22) par rapport à l'ouverture d'entrée (21).

3. Dispositif de clapet (1) selon la revendication 2, **caractérisé en ce que**
les éléments de butée (43a, 43b) sont disposés à un angle d'environ 90° l'un par rapport à l'autre par rapport à l'axe de rotation (A1) de l'arbre de clapet (30).

4. Dispositif de clapet (1) selon l'une des revendications précédentes, **caractérisé en ce que**
dans au moins une position de réglage (100) du levier de réglage (33), la surface de projection du levier de réglage (33) et de l'arbre de volet (30) sur le couvercle (4) est plus petite que l'évidement (41) dans le couvercle (4).

5. Dispositif de clapet (1) selon l'une des revendications précédentes, **caractérisé en ce que**
le couvercle (4) comprend un dispositif de fixation (48) pour fixer le dispositif d'actionnement (5) et/ou l'engrenage de réglage (51).

6. Dispositif de clapet (1) selon l'une des revendications précédentes, **caractérisé en ce que**
un joint d'étanchéité (44) est disposé entre le couvercle (4) et le boîtier du canal d'écoulement (2).

7. Dispositif de clapet (1) selon l'une des revendications précédentes, **caractérisé en ce que**
l'élément d'accouplement (34) est conçu comme un accouplement à billes.

8. Dispositif de clapet (1) selon l'une des revendications précédentes, **caractérisé en ce que**
l'élément d'accouplement (34) et le limiteur (35) sont disposés de manière opposée sur le levier de commande (33).

9. Dispositif de clapet (1) selon l'une des revendications précédentes, **caractérisé en ce que**
l'arbre de clapet (30) est supporté à une deuxième extrémité libre (37b) dans une paroi (25) du boîtier de canal d'écoulement (2).

10. Dispositif de clapet (1) selon l'une des revendications précédentes, **caractérisé en ce que**
le canal d'écoulement (20) comprend en plus un deuxième orifice de sortie (23), et le corps de clapet (31), dans une première position (101), libère un écoulement de fluide entre l'orifice d'entrée (21) et le premier orifice de sortie (22) et bloque entre l'orifice d'entrée (21) et le deuxième orifice de sortie (23), et dans une seconde position (102), il libère un écoulement de fluide entre l'ouverture d'entrée (21) et la seconde ouverture de sortie (23) et le bloque entre l'ouverture d'entrée (21) et la première ouverture de sortie (22).

11. Dispositif de clapet (1) selon l'une des revendications précédentes, **caractérisé en ce que**
le corps de clapet (31) est formé comme une tôle pliée et est placé et fixé radialement sur l'arbre de clapet (30).
